Europäisches Patentamt

European Patent Office

Office européen des brevets

(19)

(11) Veröffentlichungsnummer: **0 157 381**
**B1**

(12) **EUROPÄISCHE PATENTSCHRIFT**

(45) Veröffentlichungstag der Patentschrift: **20.06.90**

(51) Int. Cl.⁵: **H 04 M 9/08**

(21) Anmeldenummer: **85103787.9**

(22) Anmeldetag: **29.03.85**

(54) Schaltungsanordnung für eine sprachgesteuerte Freisprecheinrichtung.

(30) Priorität: **31.03.84 DE 3412111**

(43) Veröffentlichungstag der Anmeldung:
**09.10.85 Patentblatt 85/41**

(45) Bekanntmachung des Hinweises auf die
Patenterteilung:
**20.06.90 Patentblatt 90/25**

(84) Benannte Vertragsstaaten:
**DE FR GB SE**

(56) Entgegenhaltungen:
EP-A-0 009 591
DE-A-2 439 740
DE-B-1 512 775

ELEKTRISCHES NACHRICHTENWESEN, Band
53, Nr.4, 1978, Stuttgart, DE M.SLAWIK et al. "Die
neue sprachgesteuerte Freisprecheinrichtung
für die Produktfamilie INTERMAT", Seiten 288-
293

(73) Patentinhaber: **ALCATEL N.V.**
**Strawinskylaan 537 (World Trade Center)**
**NL-1077 XX Amsterdam (NL)**
(84) **FR GB SE**

(73) Patentinhaber: **Standard Elektrik Lorenz**
**Aktiengesellschaft**
**Lorenzstrasse 10**
**D-7000 Stuttgart 40 (DE)**
(84) **DE**

(72) Erfinder: **Elsässer, Martin**
**Hirschstrasse 36**
**D-7251 Hemmingen (DE)**

(74) Vertreter: **Villinger, Bernhard, Dipl.-Ing. et al**
**Standard Elektrik Lorenz AG Patent- und**
**Lizenzwesen Postfach 30 09 29**
**D-7000 Stuttgart 30 (DE)**

Courier Press, Leamington Spa, England.

**Beschreibung**

Die Erfindung betrifft eine Schaltungsanordnung für eine sprachgesteuerte Freisprecheinrichtung mit über eine Gabelschaltung anschaltbaren Teilnehmereinrichtungen, wobei jede Teilnehmereinrichtung ein Mikrofon, einen internen oder externen Lautsprecher und je eine Reihenschaltung aus einem Einkoppelverstärker, einem Dämpfungsregler und einem Auskoppelverstärker für den Sende- und den Empfangsweg aufweist und wobei der Ausgang des Einkoppelverstärkers und der Ausgang des Dämpfungsreglers mit einer Sprachsteuereinheit verbunden ist, die über eine Leitung an den Dämpfungsregler geführt ist.

Sprachgesteuerte Freisprecheinrichtungen (vgl. u.a. "Die neue sprachgesteuerte Freisprechrichtung für die Produktfamilie INTERMAT, von M. Slawik, H. Wiedmann, Elektrisches Nachrichtenwesen, Band 53, Nr. 4 1978) bieten dem Benutzer die Möglichkeit der räumlichen Bewegungsfreiheit während des Telefongespräches, da an Stelle der Sprech- und Hörkapsel des Handapparates ein Mikrofon und ein separater Lautsprecher vorhanden sind.

Ein Nachteil einer Freisprecheinrichtung besteht jedoch darin, daß einerseits ein Signal vom Lautsprecher über die Luft auf das Mikrofon gelangt und andererseits eine Kopplung zwischen Mikrofon und Lautsprecher in Form des Rückhörens der Gabelschaltung vorhanden ist, so daß ein geschlossener Verstärkungskreis besteht und dadurch störende Rückkopplungen auftreten können.

Wenn der Lautsprecher und das Mikrofon im Gehäuse des Fernsprechapparates untergebracht sind, sogenannte einteilige Freisprechgeräte, erhält man durch den kleinen Abstand zwischen Mikrofon und Lautsprecher eine niedrige Luftstreckendämpfung. Es erfordert also einen erhöhten Sprachsteuerungshub, um Rückkopplungen zu vermeiden. Dieses harte Sprachsteuerungsverhalten hat aber den Nachteil, daß aufgrund hoher Störgeräusche im Raum der eine übertragungsweg stets eingeschaltet sein kann, wodurch der Gesprächskontakt unterbrochen wird. Weiterhin geht auch das vom normalen Telefon her gewohnte "Gegensprechen" verloren, da erst mit dem Einsatz der Sprache der jeweilige übertragungsweg eingeschaltet wird.

Schaltet man nun anstatt des internen Lautsprechers einen externen Lautsprecher an den Fernsprechapparat, so läßt sich aufgrund der notwendigen harten Sprachsteuerung für den Betrieb mit dem internen Lautsprecher, die wesentlich größere Luftstreckendämpfung nicht ausnutzen.

Die technische Aufgabe der Schaltungsanordnung nach der Erfindung besteht darin, eine Freisprecheinrichtung mit einem internen Lautsprecher in eine Freisprecheinrichtung mit einem externen Lautsprecher umschaltbar zu machen.

Eine erfindungsgemäße Schaltungsanordnung der eingangs genannten Art ist dadurch gekennzeichnet, daß im Sende- und/oder Empfangsweg der Ausgang des Einkoppelverstärkers über einen Bypass und eine Schalteinheit mit dem Ausgang des Auskoppelverstärkers verbunden ist.

Ein Vorteil der Erfindung liegt insbesondere darin, daß beim Umschalten von einer einteiligen auf eine zweiteilige Freispracheinheit durch den Bypass eine Verringerung der Ruhedämpfung des Dämpfungsreglers erreicht und damit ein wesentlich besserer Gesprächskontakt geschaffen wird.

Weitere vorteilhafte Ausbildungen des Gegenstandes der Erfindung sind den Unteransprüchen zu entnehmen.

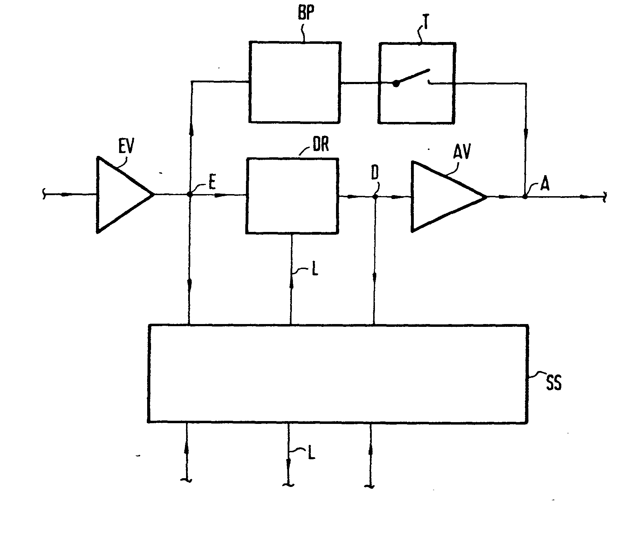

Ein Ausführungsbeispiel der Erfindung wird im folgenden anhand der Zeichnung erläutert.

Da beide Übertragungseinrichtungen je aus einer Reihenschaltung eines Einkoppelverstärkers EV, eines Dämpfungsreglers DR und eines Auskoppelverstärkers AV aufgebaut sind, an die einerseits ein Mikrofon und andererseits ein Lautsprecher angeschlossen ist, ist in der einzigen Figur zur besseren Übersicht nur eine Übertragungsrichtung gezeigt.

Eine Sprachsteuerungseinheit SS ist an den Ausgang E des Einkoppelverstärkers EV, an den Ausgang D des Dämpfungsreglers DR und über eine Leitung L an den Dämpfungsregler DR geführt. Weiterhin ist zwischen dem Ausgang E des Einkoppelverstärkers EV und dem Ausgang A des Auskoppelverstärkers AV eine Reihenschaltung aus einem Bypass BP und einer Schalteinheit T gelegt.

Die Sprachsteuerungseinheit SS regelt abhängig vom Sprachpegel die Verstärkung in den beiden Übertragungszweigen. Spricht z.B. ein Teilnehmer der Freisprecheinrichtung, so wird aus dem Sprachsignal des Mikrofons über den Einkoppelverstärker EV in der Sprachsteuerungseinheit SS ein Regelsignal für den Dämpfungsregler DR abgeleitet, wodurch ab einem bestimmten Pegel der Dämpfungsregler DR des Sendeweges aufgesteuert und das Sprachsignal zum Auskoppelverstärker AV übertragen wird. Eine Erhöhung der Verstärkung im Sendezweig bewirkt eine gleichgroße Dämpfung der Verstärkung im Empfangszweig. Weiterhin wird vom Ausgang D des Dämpfungsreglers DR im Sendezweig ein zusätzliches Ansteuersignal an die Sprachsteuerungseinheit SS gelegt, wodurch eine Hysterese des Sprachsteuerungsverhaltens erreicht und ein "Verschlukken" von Endsilben weitgehend vermieden wird.

Zum Benutzen der einteiligen Freisprecheinheit wird der Bypass BP durch die Schalteinheit T vom Sende- und/oder Empfangsweg abgetrennt. Aufgrund der kleinen Luftstreckendämpfung zwischen dem Mikrofon und dem internen Lautsprecher muß der Sprachsteuerungshub sehr hoch eingestellt sein, damit eine ausreichende Sicherheit gegenüber Rückkopplungen in Form von Pfeifgeräuschen gewährleistet ist. Diese harte Sprachsteuerung bewirkt ein gegenläufiges Ein- und Auschalten der Übertragungszweige, welches eine hohe Sprachdisziplin erfordert, da immer nur ein Teilnehmer sprechen kann.

Um nun die vorgenannten Nachteile zu verringern, kann anstelle des internen Lautsprechers ein externer Lautsprecher (zweiteiliger Betriebsfall) angeschaltet werden.

Hierzu wird erfindungsgemäß der Ausgang E des Einkoppelverstärkers EV über den Bypass BP mit dem Ausgang A des Auskoppelverstärkers AV verbunden. Durch den durchgeschalteten Bypass BP wird ein um einen fest einstellbaren Wert gedämpftes Sprachsignal auf den Ausgang A des Auskoppelverstärkers AV gelegt, so daß die hohe Ruhedämpfung des Dämpfungsreglers DR, die durch den hohen Sprachsteuerungshub bedingt ist, vermindert wird. Da das Ausgangssignal des Bypasses BP auf den Ausgang A des Auskoppelverstärkers AV geführt ist, wird jedoch die für den einteiligen Betriebsfall eingestellte Sprachsteuerungseinheit SS nicht beeinflußt.

Ein derartiger Bypass BP kann aus einer Reihenschaltung eines Widerstandes und eines Kondensators bestehen und ist sowohl im Sendeals auch im Empfangsweg einfügbar, wobei lediglich die Rückkoppelgrenze bei maximaler Lautstärkeeinstellung eingehalten werden muß, welche sich aus dem Abstand des Mikrofons vom externen Lautsprecher ergibt.

Durch den Einsatz des Bypasses BP wird eine einfache, kostengünstige Umschaltung vom einteiligen auf den zweiteiligen Freisprechbetrieb realisiert. Es entfällt die hohe Sprachdisziplin des einteiligen Betriebsfalles, da auch die Sprachsignale des Gesprächspartners bei eigenem Senden über den Bypass BP durchgeschaltet und empfangen werden.

Wird nun wieder der einteilige Betriebsfall gewünscht, so wird durch die Schalteinheit T der Bypass BP vom Sende- und/oder Empfangsweg getrennt und die ursprünglich ein gestellten Bedingungen sind in einfachster Weise hergestellt.

## Patentansprüche

1. Schaltungsanordnung für eine sprachgesteuerte Freisprecheinrichtung mit über eine Gabelschaltung anschaltbaren Teilnehmereinrichtungen, wobei jede Teilnehmereinrichtung ein Mikrofon, einen internen oder externen Lautsprecher und je eine Reihenschaltung aus einem Einkoppelverstärker (EV), einem Dämpfungsregler (DR) und einem Auskoppelverstärker (AV) für den Sendeund den Empfangsweg aufweist und wobei der Ausgang (E) des Einkoppelverstärkers (EV) und der Ausgang (D) des Dämpfungsreglers (DR) mit einer Sprachsteuerungseinheit (SS) verbunden ist, die über eine Leitung (L) an den Dämpfungsregler (DR) geführt ist, dadurch gekennzeichnet, daß im Sende- und/oder Empfangsweg der Ausgang (E) des Einkoppelverstärkers (EV) über einen Bypass (BP) und eine Schalteinheit (T) mit dem Ausgang (A) des Auskoppelverstärkers (AV) verbunden ist.

2. Schaltungsanordnung nach Anspruch 1, dadurch gekennzeichnet, daß die Schalteinheit (T) durch das Einschalten des internen Lautsprechers den Bypass (BP) von dem Sende- und/oder Empfangsweg abtrennt und umgekehrt.

3. Schaltungsanordnung nach Anspruch 1 oder 2, dadurch gekennzeichnet, daß der Bypass (BP) aus einer Reihenschaltung eines ohmschen Widerstandes und eines Kondensators besteht, wodurch das Ausgangssignal des Einkoppelverstärkers (EV) um einen fest einstellbaren Wert gedämpft wird.

## Revendications

1. Agencement de circuit destiné à une installation téléphonique à mains libres commandée par la parole comportant des postes d'abonnés susceptibles d'être branchés par l'intermédiaire d'un circuit à quatre fils, chaque poste d'abonné présentant un microphone, un haut-parleur interne ou externe et, dans chaque cas, un circuit en série composé d'un amplificateur d'accouplement (EV), d'un dispositif de régulation d'atténuation (DR) et d'un amplificateur de désaccouplement (AV) pour la voie d'émission et pour la voie de réception, et dans lequel la sortie (E) de l'amplificateur d'accouplement (EV) et la sortie (D) du dispositif de régulation de l'atténuation (DR) sont connectées à une unité de commande de la parole (SS) qui communique avec le dispositif de régulation de l'atténuation (DR) par l'intermédiaire d'un conducteur (L), caractérisé en ce que, dans la voie d'émission et/ou dans la voie de réception, la sortie (E) de l'amplificateur d'accouplement (EV) est connectée à la sortie (A) de l'amplificateur de désaccouplement (AV) par l'intermédiaire d'un circuit de dérivation (BP) et d'une unité de commutation (T).

2. Agencement de circuit selon la revendication 1, caractérisé en ce que l'unité de commutation (T) déconnecte le circuit de dérivation (BP) de la voie d'émission et/ou de la voie de réception par la mise en circuit du haut-parleur interne, et l'inverse.

3. Agencement de circuit selon la revendication 1 ou 2, caractérisé en ce que le circuit de dérivation (BP) est constitué par la disposition en série d'une résistance ohmique et d'un condensateur, le signal de sortie de l'amplificateur d'accouplement (EV) étant ainsi atténué d'une valeur qui peut être réglée de façon fixe.

## Claims

1. Circuit arrangement for a voice-controlled hands-free facility cooperating via a hybrid circuit with a subscriber facility comprising a microphone, an internal and an external loudspeaker, and two series combinations of an input amplifier (EV), a variable attenuator (DR), and an output amplifier (AV), one for the send path and one for the receive path, with the output (E) of the input amplifier (EV) and the output (D) of the variable attenuator (DR) connected to a voice control unit (SS) coupled to the variable attenuator (DR) by a line (L), characterized in that in the send path and/or the receive path, the output (E) of the input amplifier (EV) is connected to the output (A) of the output amplifier (AV) through a bypass device (BP) and a switching unit (T).

2. A circuit arrangement as claimed in claim 1, characterized in that, in response to the turning on of the internal loudspeaker, the switching unit (T) disconnects the bypass device (BP) from the send path and/or the receive path, and vice versa.

3. A circuit arrangement as claimed in claim 1, characterized in that the bypass device (BP) consists of a resistor in series with a capacitor, so that the output signal of the input amplifier (EV) is attenuated by a presettable value.